(19) **Europäisches Patentamt / European Patent Office / Office européen des brevets**

(11) **EP 3 314 946 B1**

(12) **EUROPEAN PATENT SPECIFICATION**

(45) Date of publication and mention of the grant of the patent:
**21.10.2020 Bulletin 2020/43**

(21) Application number: **16729226.7**

(22) Date of filing: **07.06.2016**

(51) Int Cl.:
*H04W 36/30* (2009.01)          *H04W 84/04* (2009.01)
*H04W 52/18* (2009.01)

(86) International application number:
**PCT/EP2016/062829**

(87) International publication number:
**WO 2016/206964 (29.12.2016 Gazette 2016/52)**

(54) **BACKHAUL AWARE CELL RANGE OPTIMIZATION OF SMALL CELLS IN HETEROGENOUS NETWORKS**

RÜCKTRANSPORTBEWUSSTE OPTIMIERUNG VON KLEINZELLEN AUSDEHNUNG IN HETEROGENE NETZWERKE

OPTIMISATION DE LA PLAGE DES PETITES CELLULES DANS DES RESEAUX HETEROGENES EN TENANT COMPTE DE BACKHAUL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2015 US 201562184616 P**

(43) Date of publication of application:
**02.05.2018 Bulletin 2018/18**

(73) Proprietor: **Nokia Solutions and Networks Oy 02610 Espoo (FI)**

(72) Inventors:
- **GORMLEY, Eamonn Bothell, Washington 98011 (US)**
- **YUN, Jungnam 98052 Redmond WA (US)**

(74) Representative: **Nokia EPO representatives Nokia Technologies Oy Karakaari 7 02610 Espoo (FI)**

(56) References cited:
**US-A1- 2011 080 864     US-A1- 2014 064 158**

- **RESEARCH IN MOTION ET AL: "Serving Cell Selection in a Heterogeneous network with Type 1 Relay", 3GPP DRAFT; R1-094463(RIM-TYPE 1 RELAY CELL SELECTION), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050388888, [retrieved on 2009-11-03]**
- **NTT DOCOMO: "Discussion on Relay Selection", 3GPP DRAFT; R1-153188 RELAY SELECTION_R, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 24 May 2015 (2015-05-24), XP050973981, Retrieved from the Internet: URL:http://www.3gpp.org/ftp/Meetings_3GPP_SYNC/RAN1/Docs/ [retrieved on 2015-05-24]**

**Description**

BACKGROUND

The greatest challenge for wireless operators today is keeping pace with the rapidly growing consumer demand for increased wireless broadband data rates. This challenge has been exacerbated by the growing mainstream adoption of smart phones and the desire for greater 'cloud' connectivity of laptops, tablets, and other mobile devices. Operators are responding to this explosive growth by investing billions of dollars into building out LTE networks and evolving to heterogeneous networks (HetNet) that include macro cells as well as small cells. The small cells can be used to increase coverage for a network, as well as for offloading traffic from macro cells.

Like macro cells, the small cells also have backhaul networks that connect small cells to a core network. In many cases, wired infrastructure that interfaces with the Internet through a wired connection such as fiber, coaxial cable or DSL can be used to couple small cells to a backhaul portion of the network. Alternatively, wireless backhaul networks can be used as well where wired connectivity is not available.

Because the coverage areas and backhaul equipment are different for small cells compared to macro cells, the reselection and handover processes used for small cells is different from the processes between two macro cells. For example, cell reselection parameters are optimized so that coverage and capacity can be improved over the heterogeneous network area even with heterogeneous interference between macro cells and small cells. However, conventional reselection and handover parameters do not generally account for factors affecting the backhaul signaling for small cells.

FIELD OF TECHNOLOGY

Embodiments of the present disclosure relate to wireless communications technologies. More specifically, elements of the present disclosure relate to a system and method for handover and reselection for small cells in a multi-node telecommunications network. Patent document US 2014/064158 discloses methods for handover decision in a heterogeneous network employing (mobile) relays by taking into account the eNB-relay back-haul signal quality in addition to the UE-eNB and UE-relay signal qualities.

BRIEF SUMMARY

The invention is defined by the appended independent claims. Preferred embodiments are defined by the dependent claims.

BRIEF DESCRIPTION OF THE DRAWINGS

FIG. 1 illustrates a wireless communications system according to an embodiment.

FIG. 2 illustrates a network resource controller according to an embodiment.

FIG. 3 illustrates a mobile relay according to an embodiment.

FIG. 4 illustrates a mobile relay in a wireless network according to an embodiment.

FIG. 5 illustrates cell reselection from a serving cell to a neighboring cell.

FIG. 6 illustrates RSRP values between a UE, a base station, and a mobile relay.

FIG. 7 illustrates selection values around an A3 event according to an embodiment.

FIG. 8 illustrates selection values around an A3 event according to another embodiment.

FIG. 9A illustrates UE paths through a first wireless environment.

FIG. 9B illustrates signal strengths of a first path in the first wireless environment.

FIG. 9C illustrates signal strengths of a second path in the first wireless environment.

FIG. 10 illustrates a UE path through a second wireless environment.

FIG. 10B illustrates signal strengths of the UE path in the second wireless environment.

FIG. 11 illustrates a process for optimizing handover or reselection in the presence of a mobile relay.

FIG. 12 illustrates an embodiment showing adjusted coverage areas of two mobile relays.

FIG. 13 illustrates signal strength histograms.

DETAILED DESCRIPTION OF THE INVENTION

A detailed description of embodiments is provided below along with accompanying figures. The scope of this disclosure is limited only by the claims and encompasses numerous alternatives, modifications and equivalents. Although steps of various processes are presented in a particular order, embodiments are not necessarily limited to being performed in the listed order. In some embodiments, certain operations may be performed simultaneously, in an order other than the described order, or not performed at all.

Numerous specific details are set forth in the following description in order to provide a thorough understanding. These details are provided for the purpose of example and embodiments may be practiced according to the claims without some or all of these specific details. For the purpose of clarity, technical material that is known in the technical fields related to this disclosure has not been described in detail so that the disclosure is not unnecessarily obscured.

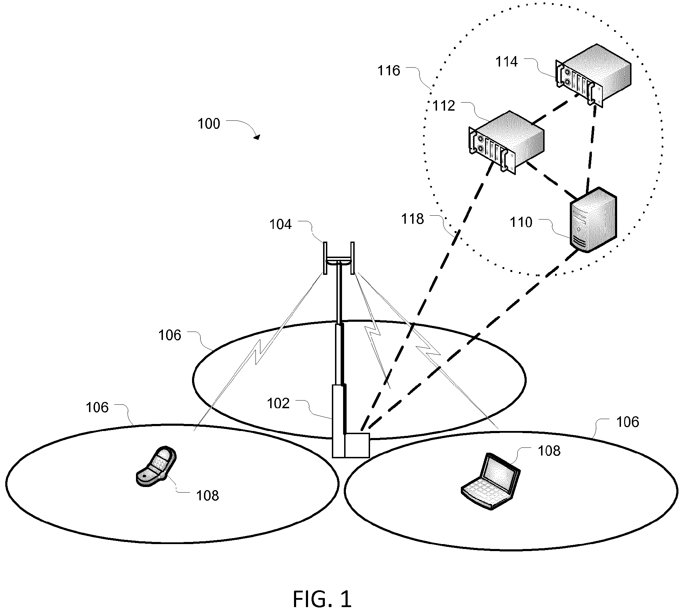

Figure 1 illustrates a networked communications system 100 according to an embodiment of this disclosure. System 100 may include one or more base stations 102, each of which are equipped with one or more antennas 104. Each of the antennas 104 may provide wireless communication for user equipment (UE) 108 in one or more cells 106. As used herein, the term "base station" refers to a wireless communications station provided in a location and serves as a hub of a wireless network. For example, in LTE, a base station may be an eNodeB. The base stations may provide service for macrocells, microcells, picocells, or femtocells. In other embodiments, the base station may be an access point in a Wi-Fi network.

The one or more UE 108 may include cell phone devices, laptop computers, handheld gaming units, electronic book devices and tablet PCs, and any other type of common portable wireless computing device that may be provided with wireless communications service by a base station 102. In an embodiment, any of the UE 108 may be associated with any combination of common mobile computing devices (e.g., laptop computers, tablet computers, cellular phones, handheld gaming units, electronic book devices, personal music players, MiFi™ devices, video recorders, etc.), having wireless communications capabilities employing any common wireless data communications technology, including, but not limited to: GSM, UMTS, 3GPP LTE, LTE Advanced, WiMAX, etc.

The system 100 may include a backhaul portion 116 that can facilitate distributed network communications between backhaul equipment or network controller devices 110, 112 and 114 and the one or more base station 102. As would be understood by those skilled in the Art, in most digital communications networks, the backhaul portion of the network may include intermediate links 118 between a backbone of the network which are generally wire line, and sub networks or base stations located at the periphery of the network. For example, cellular user equipment (e.g., UE 108) communicating with one or more base station 102 may constitute a local sub network. The network connection between any of the base stations 102 and the rest of the world may initiate with a link to the backhaul portion of a provider's communications network (e.g., via a point of presence).

In an embodiment, the backhaul portion 116 of the system 100 of Figure 1 may employ any of the following common communications technologies: optical fiber, coaxial cable, twisted pair cable, Ethernet cable, and power-line cable, along with any other wireless communication technology known in the art. In context with various embodiments, it should be understood that wireless communications coverage associated with various data communication technologies (e.g., base station 102) typically vary between different service provider networks based on the type of network and the system infrastructure deployed within a particular region of a network (e.g., differences between GSM, UMTS, LTE, LTE Advanced, and WiMAX based networks and the technologies deployed in each network type).

Any of the network controller devices 110, 112 and 114 may be a dedicated Network Resource Controller (NRC) that is provided remotely from the base stations or provided at the base station. Any of the network controller devices 110, 112 and 114 may be a non-dedicated device that provides NRC functionality among others. In another embodiment, an NRC is a Self-Organizing Network (SON) server. In an embodiment, any of the network controller devices 110, 112 and 114 and/or one or more base stations 102 may function independently or collaboratively to implement processes associated with various embodiments of the present disclosure.

In accordance with a standard GSM network, any of the network controller devices 110, 112 and 114 (which may be NRC devices or other devices optionally having NRC functionality) may be associated with a base station controller (BSC), a mobile switching center (MSC), a data scheduler, or any other common service provider control device known in the art, such as a radio resource manager (RRM). In accordance with a standard UMTS network, any of the network controller devices 110, 112 and 114 (optionally having NRC functionality) may be associated with a NRC, a serving GPRS support node (SGSN), or any other common network controller device known in the art, such as an RRM. In accordance with a standard LTE network, any of the network controller devices 110, 112 and 114 (optionally having NRC functionality) may be associated with an eNodeB base station, a mobility management entity (MME), or any other common network controller device known in the art, such as an RRM.

In an embodiment, any of the network controller devices 110, 112 and 114, the base stations 102, as well as any of the UE 108 may be configured to run any well-known operating system, including, but not limited to: Microsoft® Windows®, Mac OS®, Google® Chrome®, Linux®, Unix®, or any mobile operating system, including Symbian®, Palm®, Windows Mobile®, Google® Android®, Mobile Linux®, etc. Any of the network controller devices 110, 112 and 114 or any of the base stations 102 may employ any number of common server, desktop, laptop, and personal computing devices.

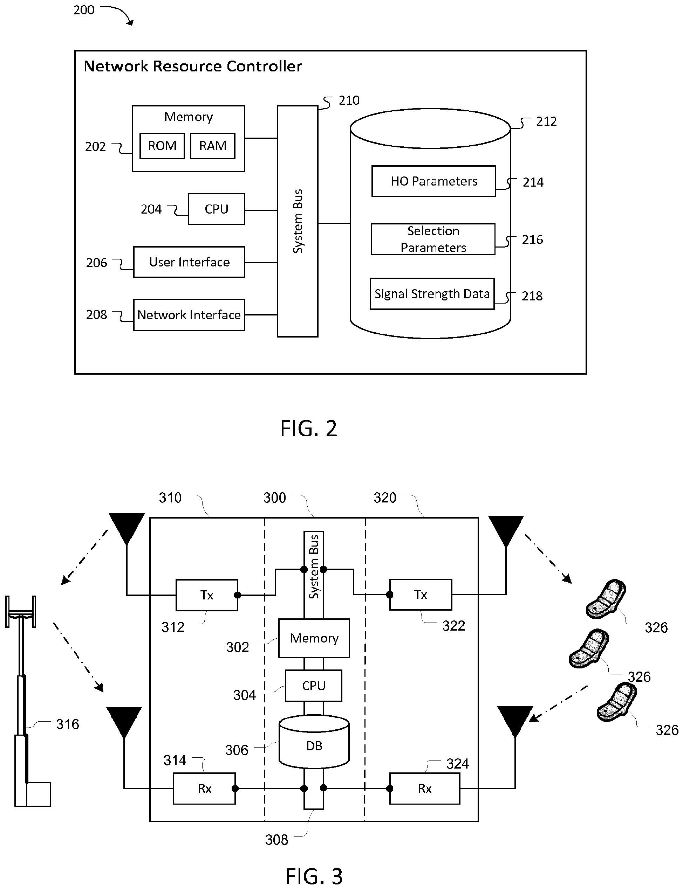

Figure 2 illustrates a block diagram of an NRC 200 that may be representative of any of the network controller devices 110, 112 and 114. Accordingly, NRC 200 may be representative of a Network Management Server (NMS), an Element Management Server (EMS), a Mobility Management Entity (MME), or a SON server. The NRC 200 has one or more processor devices including a CPU 204.

The CPU 204 is responsible for executing computer programs stored on volatile (RAM) and nonvolatile (ROM) memories 202 and a storage device 212 (e.g., HDD or SSD). In some embodiments, storage device 212 may store program instructions as logic hardware such as an ASIC or FPGA. Storage device 212 may store, for example, Handover Parameters 214, Selection Parameters 216, and Signal Strength Data 218.

The NRC 200 may also include a user interface 206 that allows an administrator to interact with the NRC's software and hardware resources and to display the performance and operation of the system 100. In addition, the NRC 200 may include a network interface 208 for communicating with other components in the networked computer system, and a system bus 210 that facilitates data communications between the hardware resources of the NRC 200.

In addition to the network controller devices 110, 112 and 114, the NRC 200 may be used to implement other types of computer devices, such as an antenna controller, an RF planning engine, a core network element, a database system, or the like. Based on the functionality provided by an NRC, the storage device of such a computer serves as a repository for software and database thereto.

In cellular telecommunications networks, small cells are being introduced in order to relieve congestion and increase coverage compared to what macro cells are able to provide. Telecommunications networks that have small cells as well as macro cells are referred to as heterogeneous networks, or HetNets. In order to interface with other elements of a cellular network, small cell base stations are typically coupled to a backhaul portion of the network through the Internet by a wired connection. However, in some cases, small cell service may be provided by a device that uses a wireless backhaul.

FIG. 3 shows an embodiment of such a device. The mobile relay 300 shown in FIG. 3 includes a number of elements that are typical to mobile computing devices, including a memory 302, a CPU 304 and a database 306 that are coupled to one another through a system bus 308. In addition, the mobile relay 300 has a first stage 310 that wirelessly communicates with one or more base station 316, and a second stage 320 that provides service to one or more user equipment 326. Although FIG. 3 shows circuitry including a single processor 304, memory 302 and database 306 that are shared between the first and second stages 310 and 320, in other embodiments, each phase may have its own dedicated circuitry.

The mobile relay 300 wirelessly communicates with one or more base station 316 using transmitter 312 and receiver 314. Although FIG. 3 only shows a single transmitter 312 and a single receiver 314, embodiments are not so limited. For example, embodiments may include a plurality of receive and transmit antennas and associated hardware for transmitting and receiving multiple signals in a multiple-input-multiple-output (mimo) environment. The base station 316, which may be a macro cell base station, may perceive the mobile relay 300 as being a typical UE to which it is providing service.

In other words, the base station 316 may schedule communications to and from the mobile relay 300 as routine communications in the network. In other embodiments, wireless communications between the mobile relay 300 and base station 316 may be handled differently from other wireless communications by, for example, using a dedicated frequency or set of frequencies. Because the first stage 310 wirelessly communicates with a base station 316, the first stage 310 may be referred to as a UE stage.

The mobile relay 300 provides wireless communication services to a plurality of UE 326 with transmitter 322 and receiver 324. Various embodiments may use a plurality of antennas and associated hardware to facilitate communication with a plurality of UEs 326 across a plurality of frequencies. Because second stage 320 provides service to UEs, it may be referred to as a base station stage of the mobile relay 300.

In order to avoid interference, the wireless frequencies used by the first stage 310 may be different from the frequencies used by the second stage 320. In order to minimize interference between a Macro cell network and the small cells, the second stage 320 of the mobile relay 300 can be configured to operate on a different frequency to frequencies used in the Macro cell network.

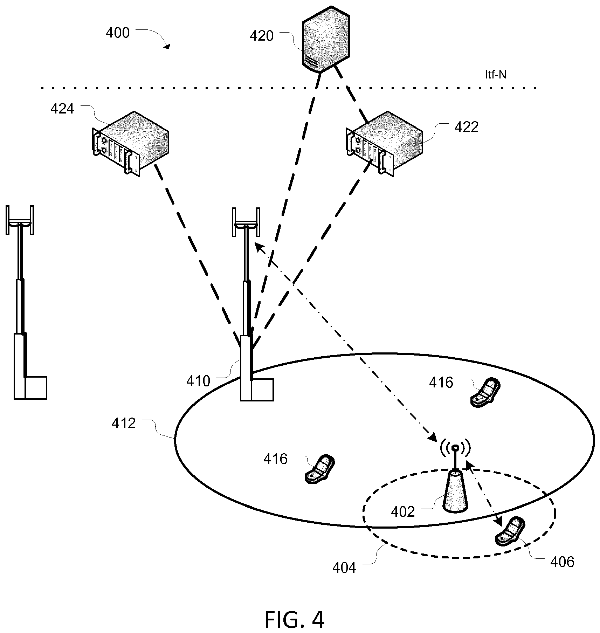

FIG. 4 shows an embodiment of a cellular telecommunications system 400 that includes a mobile relay 402. In system 400, the mobile relay 402 is providing cellular service to UE 406 within cell 404. At the same time, mobile relay 402 is located in a cell 412 of macro cell base station 410.

The macro cell base station 410 is coupled to a mobility management entity (MME)/SAE-GW 424, and an Entity Management Server/Operation Support System 422. A small cell controller 420 is coupled to the EMS/OSS 422 as well as to the macro cell base station 410 through a north-bound interface (Itf-N). The small cell controller 420 can access the OSS 422 to configure small cells, and it can also communicate with mobile relay 402 via a radio link between the macro cell base station 410.

The processes that are performed by the hardware entities may vary between embodiments. In a distributed embodiment, radio parameter settings for mobile relay 402 may be determined by mobile relays. In other embodiments, processes for determining radio parameter settings for mobile relay 402 are centralized at the small cell controller 420.

When a small cell determines parameters, it may utilize information exchanged between neighboring small cells via an X2 interface, which is typically faster than the rate at which information can be retrieved at the OSS level. Therefore, distributed implementations may enable faster reconfiguration of small cell parameters in response to RF environment changes or changes in neighboring small cells. However, decisions made by each small cell may not ensure overall network optimization including the macro network area.

When the small cell controller 420 determines parameters, the information retrieval introduces a delay that is not present when parameter decisions are distributed to individual small cell base stations such as mobile relay 402. On the other hand, centralized processes at the small cell controller 420 can ensure overall network optimization within macro networks and small cells networks even when the macro and small cells are from different vendors.

When processes are performed at the mobile relay 402, measurement reports from UE 406 can be utilized in the processes. If decisions are made at the small cell controller 420, the information used for the processes, such as measurement reports, may be transmitted to the small cell controller 420 via a macro cell backhaul link between the small cell controller and base station 410.

In the embodiment shown in FIG. 4, the mobile relay 402 is located at the cell edge of macro cell 412, thereby extending wireless network coverage. By dynamically configuring handover parameters and cell reselection parameters, the overall connectivity and coverage in the heterogeneous network can be improved.

## Cell Reselection for Idle Mode UEs

When a UE is operating in idle mode in a cellular telecommunications network, it is not actively transferring data to or from a base station. In idle mode, a UE periodically turns on its receiver to measure signals from nearby base stations. For example, in an LTE network the UE chooses a base station to be its serving cell based on the signal strength of reference signals from eNodeBs, as well as parameters broadcast by each eNodeB. When the signals from the serving cell degrade, the idle mode UE may select a different eNodeB as its serving cell. The process of selecting a serving cell by a UE in idle mode is known as cell reselection.

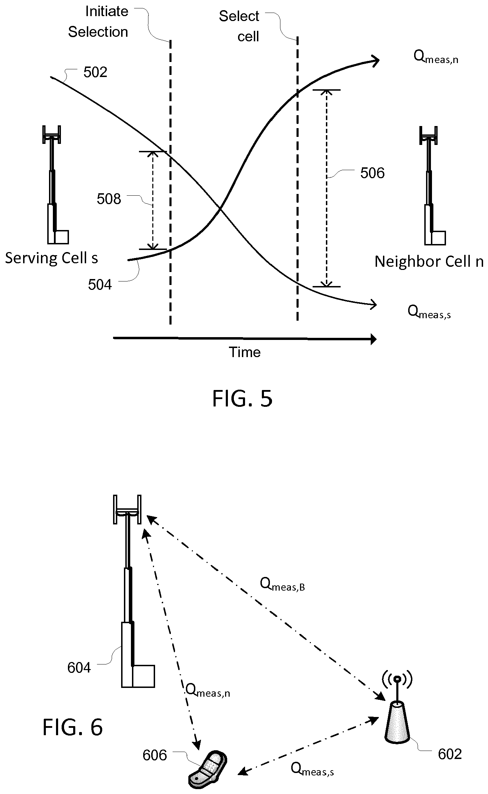

FIG. 5 shows an example of Reference Signal Received Power (RSRP) measurements from a UE moving from a serving cell "s" to a neighbor cell "n". In FIG. 5, the serving cell RSRP 502 is denoted $Q_{meas,s}$ and the neighbor cell RSRP 504 is denoted $Q_{meas,n}$.

In LTE networks, cell reselection is controlled by parameters known as $Q_{offset}$ and $Q_{Hyst}$. These values may be transmitted from the base station and decoded by UE in order to execute cell reselection.

In idle mode cell selection, the UE searches for a cell and measures RSRP values of neighboring cells. The UE then uses a cell's RSRP value to calculate a cell selection quality value $S_{rxlev}$ as expressed in Equation 1 below. In Equation 1, $Q_{rxlevmin}$ is the minimum required Rx RSRP level in the cell (dBm). $Q_{rxlevminoffset}$ is used to steer UEs based on the supported networks in the cell, and $P_{compensation}$ adjusts the maximum power level of a UE based on its power class.

[Equation 1]

$$S_{rxlev} = (RSRP - (Q_{rxlevmin} + Q_{rxlevminoffset}) - P_{compensation}) > 0$$

Both of the values $Q_{rxlevmin}$ and $Q_{relevelminoffset}$ are broadcast to each UE via a SIB1 (System Information Block Type 1) message. $P_{compensation}$ is obtained according to $\max(P_{EMAX} - P_{POWERCLASS}, 0)$ where $P_{EMAX}$ is the maximum transmit power level of the UE and $P_{POWERCLASS}$ is the maximum RF output power of the UE according to the UE power

class.

If $S_{rxlev}$ is greater than zero, the UE continues the cell selection procedure for the corresponding cell. Otherwise, the UE searches for another cell and starts measurements again.

Next, rankings of the serving cell and neighbor cells are calculated based on following equations: $R_s = Q_{meas,s} + Q_{Hyst}$, and $R_n = Q_{meas,n} - Q_{offsets,n}$, and the UE selects the cell with the highest ranking. $Q_{meas,s}$ and $Q_{meas,n}$ are RSRP measurements of serving and neighboring cells, respectively, and $Q_{offset,n}$ is an offset for a neighboring cell. For interfrequency reselection, the UE obtains the value of $Q_{offsets,n}$ by adding the broadcasted value Of $Q_{offsets,n}$ and the value of $Q_{offsetfrequency}$.

When the RSRP from neighbor cell is stronger than the RSRP from the serving cell plus $Q_{offsets,n}$ and $Q_{Hyst}$, the UE reselects the neighbor cell as its serving cell. This relationship may be expressed as $Q_{meas,n} - Q_{meas,s} \geq Q_{offsets,n} + Q_{Hyst}$, which corresponds to the difference 506 in $Q_{meas}$ values shown in FIG. 5.

**Measurement for Connected Mode UEs**

When a UE has established a Radio Resource Control connection (RRC connection) to a base station, it is said to be operating in connected mode. This connection is used by the UE to transfer data to and from the base station. If a UE moves into the vicinity of a neighboring base station with better signals, then the UE hands over to the neighboring base station. This process is known as handover.

The difference between handover and reselection is that base stations coordinate a handover with each other so that the established connection appears to be as continuous as possible to the subscriber. The serving base stations can choose the optimal time for the handover to take place. For example, a small cell acting as a serving base station can choose to hand a UE over to a Macro cell, even if the signal from the small cell is better than the signal from the Macro cell.

When in connected mode, UEs periodically measure signals of surrounding cells. UEs can be configured to report these measurements to the serving cell periodically, or when the signal from the serving cell degrades and the UE determines that a handover may be required to maintain acceptable service. In LTE networks, the situations that initiate a handover process are referred to as measurement events.

In an LTE network, measurement events A1, A2, A3, A4, A5, and A6 are based on either RSRP or RSRQ measurements. Inter-system LTE events B1 and B2 are based on CPICH RSCP or CPICH Ec/Io for UMTS systems. For example, an event A3 is triggered when a neighbor cell signal becomes offset better than serving cell signal.

If a UE is configured for reporting during A3 events, then the UE will start reporting measurements to the serving cell if an Entering Condition is true and if an A3event is configured for the UE. The UE stops reporting measurements to the serving cell if a Leaving Condition is true. The Entering Condition may be expressed according to the following Equation 2:

[Equation 2]

$$Q_{meas,n} + offsetFreq_n + CIO_n - Hysteresis > Q_{meas,s} + offsetFreq_p + CIO_p + a3offset$$

The Leaving Condition may be expressed according to the following Equation 3:

[Equation 3]

$$Q_{meas,n} + offsetFreq_n + CIO_n + Hysteresis < Q_{meas,s} + offsetFreq_p + CIO_p + a3offset$$

In Equation 2 and Equation 3:

$Q_{meas,n}$  is the measurement result of the neighboring cell,
$offsetFreq_n$  is the frequency specific offset of the frequency of the neighboring cell,
$CIO_n$  is the cell individual offset of the neighbor cell,
$Qmeas,s$  is the measurement results of the serving cell (PCell),
$offsetFreq_p$  is the frequency specific offset of the frequency of the PCell,
$CIO_p$  is the cell individual offset of the PCell,
$Hysteresis$  is the hysteresis parameter for this event, and
$a3offset$  is the offset parameter for an A3 event.

Since handover parameters and cell reselection parameters are different parameters and configured separately, embodiments may change handover parameters in conjunction with changing reselection parameters, so that the effective cell size of a mobile relay is the same for idle mode and connected mode UEs. Although portions of this disclosure focus on one or the other of connected mode and idle mode, persons of skill in the art will recognize that many of the principles discussed in conjunction with idle mode may be applied to connected mode and vice versa.

**Measurements for Cell Reselection and Handover Parameter Configurations**

FIG. 6 shows measurements according to an embodiment. In FIG. 6, a mobile relay 602 is coupled to a macro cell base station 604 through a wireless backhaul. The signal strength of the backhaul signal is denoted as $Q_{meas,B}$. In addition, FIG. 6 shows a UE 606 that receives signals from serving base station 604 and mobile relay 602. In the embodiment of FIG. 6, the RSRP for the serving mobile relay 602 is denoted as $Q_{meas,s}$, while the RSRP for neighboring macro cell base station 604 is denoted as $Q_{meas,n}$.

Since the small cell backhaul RSRP, $Q_{meas,B}$, is not known to UEs, handover and cell reselection parameters may be configured to reflect the backhaul status in order to optimally steer UEs to macro cell or small cell. For example, when a mobile relay is the serving cell, a UE conventionally selects the mobile relay when $Q_{meas,s}$ is bigger than $Q_{meas,n}$ - $Q_{Hyst}$ - $Q_{offsets,n}$ regardless of the quality of a wireless backhaul ($Q_{meas,B}$).

When the backhaul signal strength is lower than the signal strength between the UE and the macro cell base station, the UE may be better served by the macro cell base station than the mobile relay. However, in a conventional system, UEs may stay connected to the small cell even when $Q_{meas,n}$ is higher than $Q_{meas,B}$, potentially missing an opportunity of having higher spectral efficiency via better radio link to the macro cells.

In an embodiment, in order to steer UEs to a mobile relay to or from a macro cell, UEs in connected mode can be configured to measure signal strengths of a serving cell and neighbor cells and report those measurement results to the mobile relay and/or a small cell controller coupled to the mobile relay. The measurements can be performed periodically or triggered by events (e.g., event A3). The measurement results are then evaluated at the mobile relay or at the small cell controller to reconfigure handover or cell reselection parameters for UEs which are communicating with the mobile relay.

In an embodiment, handover and cell reselection parameters are adjusted so that handover or cell reselection processes steer UEs from a small cell to a macro cell when the signal strength from the macro cell is higher than the signal strength of a wireless backhaul between the macro cell and the small cell.

**Parameter Configuration based on A3 Event Measurement**

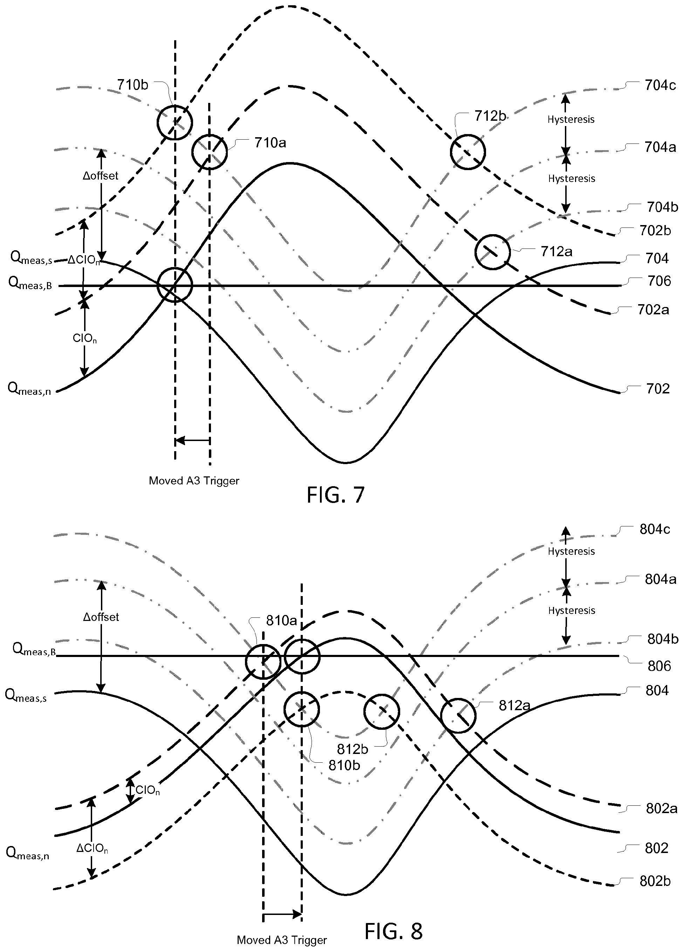

In an embodiment, a UE is configured to measure signal strength of a serving cell and neighbor cells whenever an A3 event is triggered. FIG. 7 shows an embodiment of signal strengths and offsets around an A3 event from the perspective of a UE that is moving. In addition, FIG. 7 shows how the trigger condition may be changed when the signal strength for a wireless backhaul between a mobile relay and a macro cell base station is lower than the A3 event trigger level.

FIG. 7 shows an RSRP 702 ($Q_{meas,n}$) of a macro cell, as well as first and second offsets 702a and 702b. The first offset 702a is a conventional *CIO_n* offset, while the second offset 702b is a $\Delta$CIO offset according to an embodiment. The RSRP of a serving cell ($Q_{meas,s}$), which is a mobile relay, is represented as 704. An aggregated offset $\Delta$*offset* 704a has two offsets of its own, 704b and 704c, which are $\Delta$*offset* - *Hysteresis* and $\Delta$*offset* + *Hysteresis,* respectively.

The backhaul RSRP ($Q_{meas,B}$) is labeled as 706. Because a mobile relay is typically stationary after it is installed, the backhaul RSRP 706 is constant throughout the measuring period shown in FIG. 7.

The aggregated offset $\Delta$*offset* may be calculated by the following Equation 4:

[Equation 4]

$$\Delta offset = a3offset + \left(offsetFreq_p - offsetFreq_n\right) + CIO_p$$

The signal strength levels of a neighbor macro neighbor cell when the A3 event was triggered, $Q_{meas,n,A3}$, is measured and compared to the backhaul signal strength $Q_{meas,B}$. The A3 trigger level, $Q_{A3}$, can be estimated by averaging measurement reports of $Q_{meas,s,A3}$ + $\Delta$*offset* + *Hysteresis* and $Q_{meas,n,A3}$ + *CIO_n* during A3 report intervals according to the following Equation 5:

[Equation 5]

$$Q_{A3} = E\left\{\frac{\left(Q_{meas,s,A3} + \Delta offset + Hysteresis\right) + \left(Q_{meas,n,A3} + CIO_n\right)}{2}\right\}$$

In an embodiment, when the value $Q_{A3}$ - $CIO_n$ is equal to $Q_{meas,B}$, the A3 trigger condition is not moved. However, when the values are not the same, the $CIO_n$ is adjusted so that the event can be triggered when the neighbor macro cell signal strength $Q_{meas,n}$ becomes higher than the signal strength of the backhaul, $Q_{meas,B}$.

The cell individual offset for the macro neighbor cell, $CIO_n$ can be obtained according to the following Equation 6:

[Equation 6]

$$CIO_n = \min\left(CIO_{max}, \max\left(CIO_{min}, CIO_{n,cur} + \Delta CIO\right)\right)$$

where, $CIO_{n,cur}$ is the current $CIO_n$, $CIO_{max}$ = 24, $\Delta CIO$ = $C$ × ($Q_{A3}$ - $CIO_{n,cur}$ - $Q_{meas,B}$ and

$$C = \begin{pmatrix} 1 & if\ \left(Q_{A3} - CIO_{n,cur} - Q_{meas,B}\right) \le 0 \\ 2 & otherwise \end{pmatrix}.$$

When $CIO_n$ is updated for connected mode UEs, the offset for idle mode UEs, $Q_{offset,n}$ may be updated as well so that the effective cell coverage for idle mode UEs and connected mode UEs is the same in both modes of operation. The offset for idle mode may be updated by an RRC message. In an embodiment, the idle mode offset is $Q_{offset,n}$ = -$CIO_n$.

If the UE reports A3 event measurements over time period *TimetoHOInitiation* and the measurements continue to satisfy handover criteria for the entire time period, handover is initiated by the small cell and the UE can be handed over to the macro cell.

In the embodiment shown in FIG. 7, the point at which an A3 state is triggered is modified based on the signal strength of the wireless backhaul $Q_{meas,B}$. In a conventional system, the A3 state is triggered when the CIO adjusted neighbor signal strength value 702a exceeds a hysteresis adjusted offset of the serving base station 704c. This point is designated as 710a in FIG. 7. When the A3 entry point is adjusted to account for the backhaul signal strength, the entry point moves to location 710b.

Similarly, the A3 event exit point is shifted. FIG. 7 shows a conventional A3 exit point 712a which occurs when the offset serving cell signal strength 704a that is adjusted by subtracting a hysteresis factor, as shown in 704b, exceeds the neighbor cell signal strength offset by $CIO_n$, shown by 702a.

FIG.8 shows an example of signal strengths and offsets in an embodiment in which the signal strength for a wireless backhaul between a mobile relay and a macro cell base station is higher than the A3 event trigger level. In this situation, an embodiment of this disclosure reduces the cell individual offset for the macro cell neighbor, $CIO_n$, so that the A3 event is triggered when the signal strength from the macro cell exceeds the backhaul signal strength level. The cell individual offset $CIO_n$ and cell reselection offset $Q_{offset,n}$ can be obtained based on the equations provided above.

In the scenario of FIG. 8, the A3 entry and exit trigger events that would conventionally occur at points 810a and 812a, respectively, are shifted to points 810b and 812b by accounting for the signal strength of the wireless backhaul for a mobile relay in cell selection parameters.

When calculating the cell individual offset, $CIO_n$, the small cell controller or the mobile relay may define a step size of $\Delta CIO$ instead of applying the exact value obtained from estimation. In other words, in an embodiment, the value of $\Delta CIO$ may be selected from a plurality of predetermined values.

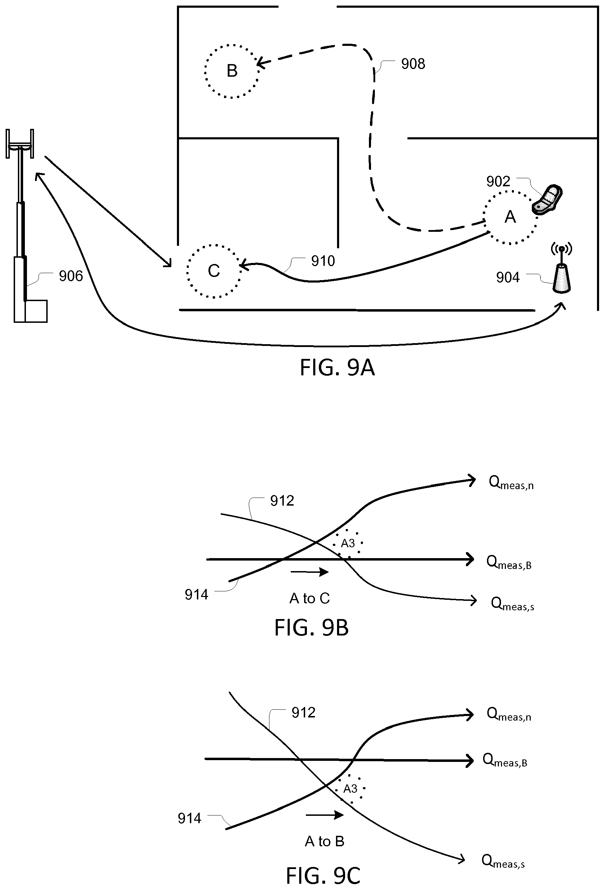

FIG. 9A shows an example in which UE 902 is connected to a mobile relay 904, which in turn is coupled to macro cell base station 906 through a wireless backhaul. In the example of FIG. 9A, a UE starts at position A and moves along path 908 to position B, or along path 910 to position C. As seen in FIG. 9B, if the UE moves to position C, then the signal strength 914 from the macro cell base station 906 increases. Meanwhile, because position C has a line of sight path to mobile relay 904, the signal strength 912 from mobile relay 904 is strong as well, and decreases gradually.

When the UE moves from position A to position C, the signal strength 914 from base station 906 increases, but the signal strength 912 from the mobile relay is also strong so an A3 event is triggered when both signal strengths are higher than the backhaul signal strength. When the UE moves from A to B, the signal strength from the mobile relay decreases faster and an A3 event is triggered when both signal strengths are lower than the backhaul signal strength.

If a $CIO_n$ value is obtained from the A3 event measurement of UE at position C, modifying the $CIO_n$ value to

account for the quality of the wireless backhaul link will make the macro cell 906 more attractive in handover and cell reselection. However, if a $CIO_n$ value is obtained from an A3 event measurement at position B, the modified $CIO_n$ causes the mobile relay to be more attractive in handover and cell reselection.

In various embodiments, when multiple UE are connected to a single mobile relay, the $CIO_n$ value can be chosen for the mobile relay in a manner that favors different outcomes. The following two rules illustrate two specific embodiments of choosing a $CIO_n$ value when multiple UEs are connected to a single mobile relay. Although the parameter discussed here is $CIO_n$, persons of skill in the art will recognize that these principles apply to the $Q_{offset,n}$ parameter as well.

In a first embodiment, a wireless system uses the smallest $CIO_n$ value obtained from A3 measurements as a $CIO_n$ value for all UEs connected to the mobile relay. In this embodiment, the UEs are more likely to stay connected to the mobile relay, and less likely to reselect or handover to a neighboring cell. The $CIO_n$ value may be updated when additional reports are received from UEs. In an embodiment, when the UE associated with the smallest $CIO_n$ value disconnects from the mobile relay, the $CIO_n$ value for the mobile relay is updated with the next lowest $CIO_n$ value based on UEs that are currently connected to the mobile relay.

In a second embodiment, a wireless system uses the largest $CIO_n$ value obtained from A3 measurements as a $CIO_n$ value for all UEs connected to the mobile relay. Such an embodiment favors connection to a cell with higher levels of spectral efficiency.

**Parameter Configuration based on Periodic Measurement**

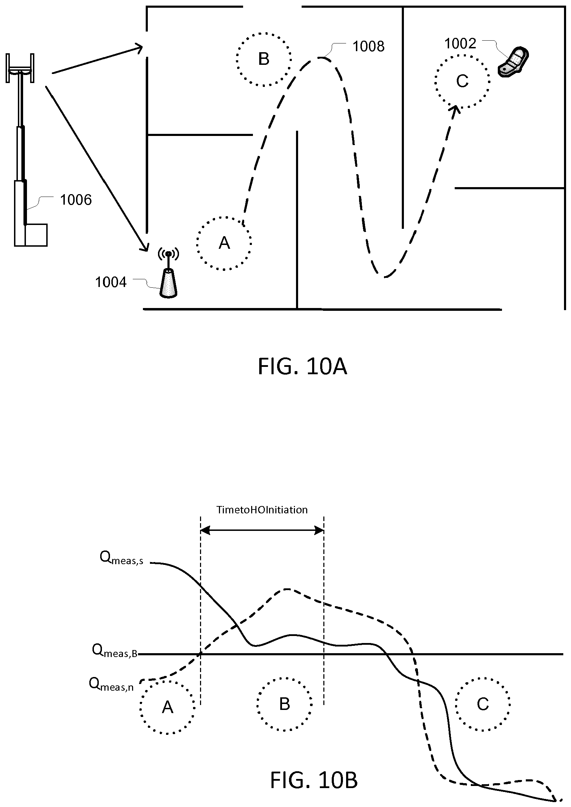

When UEs are configured to measure signal strength of serving cell and neighbor cells periodically, the handover parameters may be determined in a similar fashion to cell reselection parameters. FIG. 10A and 10B illustrate an embodiment in which signal strength data is measured periodically, instead of or in addition to measuring signal strength data in response to an A3 event trigger.

FIGS. 10A and 10B are provided to illustrate an example of a scenario in which periodic measurement reports are used for cell reselection parameter decision processes. In FIG. 10A, a UE 1002 first connects to mobile relay 1004 at location A and then moves to locations B and C along path 1008. The UE 1002 is configured to measure and report the strongest cells to the serving base station periodically. The reported measurement data is evaluated at the mobile relay 1004 or at a small cell controller.

As the UE 1002 moves to location B, the signal from the serving mobile relay 1004, $Q_{meas,s}$, decreases, but it is initially stronger than the signal from the neighboring macro cell 1006. At the same time, the signal from macro cell 1006, $Q_{meas,n}$, exceeds the strength of the backhaul link signal, $Q_{meas,B}$.

In an embodiment, when the reported RSRP of the macro cell 1006, $Q_{meas,n}$ is higher than the RSRP of the signal from macro cell to the mobile relay 1004, $Q_{meas,B}$, the mobile relay or a small cell controller further evaluates signal data during time period *TimetoHOInitiation*. If the measurement reports show that $Q_{meas,n}$ is higher than $Q_{meas,B}$ during *TimetoHOInitiation*, then a handover may be initiated by the mobile relay 1004 and the UE 1002 can be handed over to the macro cell 1006. Therefore, in the embodiment of FIGS. 10A and 10B, UE 1002 would be handed over to macro cell base station 1006 at the end of *TimetoHOInitiation*.

In an embodiment, the cell edge value $Q_{edge}$ is estimated by averaging $Q_{meas,n}$ and $Q_{meas,s}$. Therefore, the cell individual offset $CIO_n$ can obtained according to the following Equation 7:

[Equation 7]

$$Q_{edge} = E\left\{\frac{Q_{meas,s} + Q_{meas,n}}{2}\right\} = Q_{A3} - E\left\{\frac{\Delta offset + Hysteresis + CIO_n}{2}\right\}$$

After $Q_{edge}$ has been determined, the A3 event level $Q_{A3}$ can be estimated from the cell edge level according to the following Equation 8:

[Equation 8]

$$Q_{A3} = Q_{edge} + E\left\{\frac{\Delta offset + Hysteresis + CIO_n}{2}\right\}$$

After $Q_{A3}$ has been determined, $CIO_n$ and $Q_{offset,n}$ can be obtained as discussed above with respect to A3 event measurements.

When determining the cell individual offset, $CIO_n$, the small cell controller or the mobile relay may define a step size of $\Delta CIO$ instead of applying the exact value obtained from estimation. In other words, the $\Delta CIO$ value may be selected from a set of predetermined values instead of using the precise value resulting from calculations. The value of $CIO_n$ may be increased or decreased based on the $\Delta CIO$ value, thereby adjusting the cell individual offset based on signal strength of a wireless backhaul of a mobile relay.

When multiple UEs are connected to a mobile relay in an embodiment in which measurements are collected periodically, $CIO_n$ and $Q_{offset,n}$ can be chosen in the same manner discussed above with respect to A3 triggered measurements. In particular, a wireless system may use the highest or lowest, $CIO_n$ and $Q_{offset,n}$ values of UEs connected to the mobile relay.

**Overall steps of cell range adjustment between macro cell and small cell**

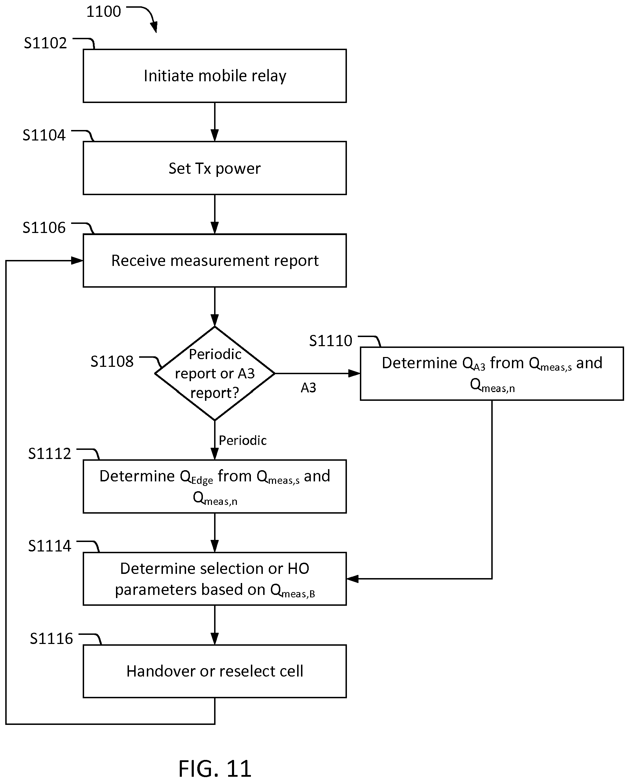

FIG. 11 illustrates a process 1100 of optimizing reselection and handover parameters in a wireless communications system that includes a mobile relay device coupled to a base station through a wireless backhaul.

A mobile relay device is initiated at S1102. Initiating the mobile relay may include establishing a wireless backhaul link to a macro cell base station and initiating service to one or more UEs. In an embodiment, when power is supplied to a mobile relay, the mobile relay determines the strength of the wireless backhaul and compares the signal strength to a threshold value. The signal strength value may be an RSRP value.

In an embodiment, when the signal strength is greater than the threshold value, then the mobile relay may set its transmit power as the maximum possible transmit power at S1104. In contrast, when the backhaul signal strength is less than the threshold value, the mobile relay may enter an alarm state, and/or reduce its transmit power to zero.

Measurement reports that measure signal strength of signals $Q_{meas,s}$, $Q_{meas,n}$ and $Q_{meas,B}$ are received at S1106. The measurement reports may be received by, for example, the mobile relay or a small cell controller coupled to a backhaul of the wireless network. As indicated by S1108, the measurement reports may be periodic reports received, for example, when UE are in connected mode, or reports that were generated in response to an A3 trigger event when the UE is in idle mode.

When the signal strength values are reported in conjunction with an A3 event, a $Q_{A3}$ value may be determined at S1110. In an embodiment, the $Q_{A3}$ value is determined using Equation 8 above. Alternatively, when the signal strength values are reported periodically, a $Q_{edge}$ value may be determined at S1112 in accordance with Equation 7 above.

At least one of selection parameters and handover parameters for the mobile relay are determined based on the strength of the wireless backhaul at S1114. For reselection, the $CIO_n$ and $Q_{offset,n}$ are adjusted to account for the wireless backhaul signal strength of the mobile relay. In an embodiment, handover parameters and reselection parameters for the mobile relay are determined in conjunction with one another so that the cell size perceived by UEs in idle mode is about the same as the cell size perceived by UEs in connected mode.

A handover or reselection may be conducted at S1116 using the adjusted parameters from S1114. In an embodiment, a UE served by a mobile relay may be handed over to a macro cell base station using the adjusted parameters. For example, when the strength of a wireless backhaul to a macro cell base station falls below the strength of signals between the UE and the macro cell base station, the UE may handover to the macro cell base station even when it experiences a strong signal from the mobile relay.

In another embodiment, a UE served by a mobile relay may not be handed over to a macro cell base station using the adjusted parameters, for example when the wireless backhaul is stronger than a link between the UE and the macro cell base station.

In other embodiments, cell reselection may or may not occur based on reselection parameters that are adjusted to account for the strength of a wireless backhaul.

Based on periodic measurement or event A3 measurement, the mobile relay or small cell controller can adjust handover and cell reselection parameters using process 1100 so that UE can always be connected to the best serving cell. The adjusted handover and reselection parameters may be used to conduct a handover or reselection process.

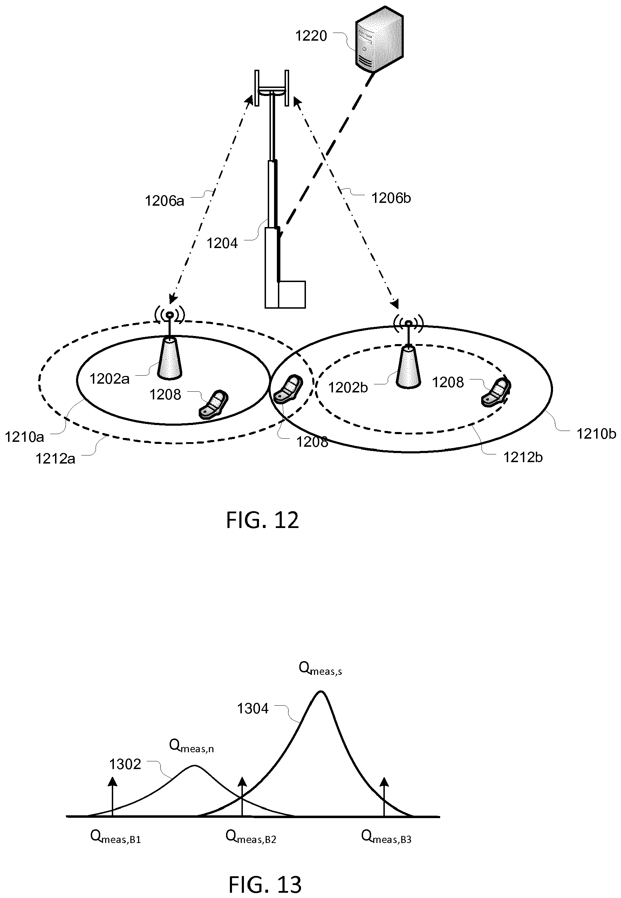

When multiple small cells are present in a limited area, cell range adjustments between small cells can be as important as cell range adjustments between macro cell and small cells. FIG. 12 shows an example of cell range adjustments between two small cells according to an embodiment.

In FIG. 12, a first mobile relay 1202a and a second mobile relay 1202b are each coupled to macro cell base station 1204 through wireless links 1206a and 1206b, respectively. The mobile relays 1202a and 1202b are providing service to a plurality of UEs 1208.

In the embodiment of FIG. 12, the signal strength of wireless backhaul link 1206a is substantially greater than the signal strength of wireless backhaul link 1206b. For example, the strength of link 1206a may be -70dB, while the strength of link 1206b may be -80dB. However, the precise values may vary between embodiments. Meanwhile, default or original coverage areas for the mobile relays 1202a and 1202b are represented by coverage areas 1210a and 1210b, respectively.

In an embodiment, a size of a coverage area of a mobile relay 1202 is adjusted based on the quality of the wireless backhaul link 1206. Therefore, mobile relay 1202a has increased the size of its coverage area from original coverage area 1210a to adjusted coverage area 1212a. At the same time, mobile relay 1202b has decreased the size of its coverage area from original coverage area 1210b to adjusted coverage area 1212b. As a result, a UE 1208 disposed in a position near the edges of both mobile relays may be served by the mobile relay 1202a that has a stronger backhaul signal 1206a, as opposed to mobile relay 1202b that has a weaker link 1206b.

The cell range of two neighboring small cells can be adjusted by the small cell controller based on reported backhaul measurement data (e.g. $Q_{meas,B}$) from mobile relays 1202a and 1202b. In an embodiment, a small cell controller 1220 coupled to base station 1206 may configure cell individual offsets so that the mobile relay 1202a with a better backhaul 1206a is more attractive to UEs, and the mobile relay 1202b with a worse backhaul 1206b is less attractive to UEs.

In an embodiment, the cell individual offset of a neighboring small cell, $CIO_n$ can be configured according to the following Equation 9:

[Equation 9]

$$CIO_n = \min(CIO_{max}, \max\left(CIO_{min}, \left(Q_{meas,Bn} - Q_{meas,Bs}\right)\right))$$

In Equation 9, $CIO_{max}$ = 24, $CIO_{min}$ = -24, $Q_{meas,Bs}$ is the backhaul quality of a serving cell and $Q_{meas,Bn}$ is the backhaul quality of a neighboring cell. If the serving cell has a better backhaul than the neighboring cell, then the $CIO_n$ obtained from Equation 9 will make the serving cell more attractive to UE and the neighboring cell less attractive.

Once cell individual offset values, $CIO_n$, are obtained, the cell reselection parameter, $Q_{offset,n}$, may also be configured so that the cell range for connected mode UEs matches the cell range for idle mode UEs.

In an embodiment, the small cell controller 1220 may adjust the transmit power of each mobile relay 1202 so that the difference of transmit power levels of each small cell is proportional to the backhaul signal strength. In a specific embodiment, the transmit powers are adjusted using the difference in backhaul signal strength values. For example, if a backhaul strength of mobile relay 1202a is 10dB higher than the backhaul strength of mobile relay 1202b, then the transmit powers of the mobile relays may be adjusted so that the transmit power of mobile relay 1202a is 10dB higher than the transmit power of mobile relay 1202b. This may be accomplished by adjusting transmit power levels of one or both of the relays.

In an embodiment, power levels may be adjusted to satisfy the following relationship:

$$P_{TX,n} - P_{TX,s} = Q_{meas,Bn} - Q_{meas,Bs}$$

Accordingly, in various embodiments, the effective coverage area of mobile relays may be adjusted based on signal strength of a wireless backhaul using at least one of adjusting reselection parameters, adjusting handover parameters, and adjusting transmit power.

**Power adjustment based on measurement data**

FIG. 13 shows exemplary histograms of signal strength measurement data. Three examples of backhaul signal strength are shown in the figure: $Q_{meas,B1}$, $Q_{meas,B2}$ and $Q_{meas,B3}$.

In an embodiment, when the signal strength is below a threshold value, the mobile relay may turn off its transmit power so that UEs will connect directly to the base station providing service to the mobile relay. For example, the transmit power of a mobile relay may be turned off when the backhaul signal strength to a macro cell is within the lowest 5% of measured signal strength values, or within the lowest 5% of the operative range of the mobile relay.

In the example of FIG. 13, the point at which power is no longer supplied to the transmitter of a mobile relay is designated as $Q_{meas,B1}$, which is the average of the bottom 5% of $Q_{meas,n}$. However, in other embodiments, the precise location of this point may differ.

An embodiment may employ a policy by which the connection between UEs and the mobile relay is retained so long as the backhaul signal strength remains above a threshold. For example, if the backhaul signal measurement is around $Q_{meas,B3}$ (e.g., above the average of top 5% of $Q_{meas,n}$), the UE may always connect to the mobile relay regardless of the measured signal strength on macro cell, $Q_{meas,n}$, as long as the signal from the mobile relay is higher than $Q_{rxlevmin}$.

In an embodiment, when the backhaul signal strength is $Q_{meas,B2}$ (e.g., between 5% ~ 95% of $Q_{meas,n}$), the handover and cell reselection parameters may be dynamically updated based on the most recent periodic measurement data.

Embodiments of the present disclosure include a system and process that account for characteristics of a wireless backhaul between a mobile relay and a neighboring base station. By accounting for the wireless backhaul, embodiments of this disclosure can increase the spectral efficiency of a wireless communications network.

**Claims**

1. A method performed at a small cell controller of a wireless cellular communications network (400), the method comprising:

    receiving, from an User Equipment, UE, measurement reports of first signal strength data for a wireless backhaul between a mobile relay (402) and a base station (410);
    receiving, from the UE, measurement reports of second signal strength data for a signal between the user equipment (406) and the mobile relay;
    receiving, from the UE, measurement reports of third signal strength data for a signal between the UE and the base station;
    determining a cell parameter for a user equipment in communication with the mobile relay and the base station using the first, second and third signal strength data;
    evaluating the cell parameter in order to configure cell reselection or handover service for the UE;
    adjusting the cell parameter to steer the UE from the mobile relay to the base station when a signal between the UE and the mobile relay is stronger than a signal between the UE and the base station and a backhaul signal between the mobile relay and the base station is less than the signal between the UE and the base station;
    wherein the cell parameter is at least one of a cell selection parameter and a handover parameter; and
    transferring the service for the UE from the mobile relay to the base station based on the adjusted cell parameter.

2. The method of claim 1, wherein the cell parameter is a cell individual offset, CIO, parameter.

3. The method of claim 1, further comprising:
    adjusting reselection parameters and handover parameters based on the first signal strength data so that a coverage area of the mobile relay (402) for UEs (406) in connected mode is the same as a coverage area of the mobile relay for UEs in idle mode.

4. The method of claim 1, wherein the adjusting the cell parameter to transfer the UE from the mobile relay to the base station occurs when a backhaul signal between the mobile relay (402) and the base station (410) is less than the signal between the UE (406) and the base station.

5. The method of claim 1, wherein the second signal strength data and the third signal strength data are received in conjunction with an A3 event.

6. The method of claim 1, wherein the first, second and third signal strength data are received by the small cell controller (420) coupled to the base station (410) through a wireline backhaul, and the small cell controller determines the parameter and the network equipment includes the mobile relay (402) and the base station (410).

7. The method of claim 1, wherein the first, second and third signal strength data are received by the mobile relay (402), the mobile relay determines the parameter, and the network equipment includes the mobile relay and the base station (410).

8. The method of claim 1, wherein third signal data are received from a plurality of UEs (406) receiving service from the mobile relay (402), the method further comprising:

    determining Cell Individual Offset, CIO, parameters for each of the plurality of UEs; and
    applying a highest CIO parameter of the CIO parameters for each of the plurality of UEs to handover and reselection processes for the plurality of UEs.

9. The method of claim 1, wherein third signal data are received from a plurality of UEs (406) receiving service from the mobile relay (402), the method further comprising:

determining Cell Individual Offset, CIO, parameters for each of the plurality of UEs; and
applying a lowest CIO parameter of the CIO parameters for each of the plurality of UEs to handover and reselection processes for the plurality of UEs.

10. A small cell controller (200) coupled to a backhaul (116) of a cellular telecommunications network (100), the small cell controller including:

a memory (202);
a network interface (208);
a processor (204); and
a non-transitory computer readable medium with computer executable instructions stored thereon which, when executed by the processor, perform the following operations:

receiving, from an user equipment, UE, measurement reports of first signal strength data for a wireless backhaul between a mobile relay (300, 402) and a base station (316, 410);
receiving, from the UE, measurement reports of second signal strength data for a signal between the user equipment (406) and the mobile relay;
receiving, from the UE, measurement reports of third signal strength data for a signal between the UE and the base station;
determining a cell parameter for a user equipment in communication with the mobile relay and the base station using the first, second and third signal strength data;
evaluating the cell parameter in order to configure cell reselection or handover service for the UE; and
adjusting the cell parameter to steer the UE from the mobile relay to the base station when a signal between the UE and the mobile relay is stronger than a signal between the UE and the base station and a backhaul signal between the mobile relay and the base station is less than the signal between the UE and the base station; and
transferring service for the UE from the mobile relay to the base station based on the adjusted cell parameter;
wherein the cell parameter is at least one of a cell selection parameter and a handover parameter.

11. The small cell controller (200) of claim 10, wherein the cell parameter is a cell individual offset, CIO, parameter or a $Q_{offset}$ parameter.

12. The small cell controller (200) of claim 11, wherein the operations further comprise:
adjusting reselection parameters and handover parameters based on the first signal strength data so that a coverage area of the mobile relay for UEs in connected mode is the same as a coverage area of the mobile relay for UEs in idle mode.

13. A mobile relay device (300) coupled to a base station (316) through a wireless backhaul in a cellular telecommunications network (100, 400), the mobile relay device including:

a memory (302);
a network interface;
a processor (304); and
a non-transitory computer readable medium with computer executable instructions stored thereon which, when executed by the processor, perform the following operations:

receiving, from an user equipment, UE, measurement reports of first signal strength data for a wireless backhaul between the mobile relay (300) and a base station (316);
receiving, from the UE, measurement reports of second signal strength data for a signal between the user equipment (326) and the mobile relay;
receiving, from the UE, measurement reports of third signal strength data for a signal between the UE and the base station;
determining a cell parameter for a user equipment in communication with the mobile relay and the base station using the first, second and third signal strength data;
evaluating the cell parameter in order to configure cell reselection or handover service for the UE;
adjusting the cell parameter to steer the UE from the mobile relay to the base station; and

transferring service for the UE from the mobile relay to the base station based on the adjusted cell parameter; wherein the cell parameter is at least one of a cell selection parameter and a handover parameter; wherein, when a signal between the UE and the mobile relay is stronger than a signal between the UE and the base station and a backhaul signal between the mobile relay and the base station is less than the signal between the UE and the base station, service for the UE is transferred from the mobile relay to the base station.

14. The mobile relay device (300) of claim 13, wherein the cell parameter is a cell individual offset, CIO, parameter.

15. The mobile relay device (300) of claim 13, wherein the operations further comprise:
adjusting reselection parameters and handover parameters is based on the first signal strength data so that a coverage area of the mobile relay for UEs (326) in connected mode is the same as a coverage area of the mobile relay for UEs in idle mode.

**Patentansprüche**

1. Verfahren, das in einer Kleinzellensteuerung eines drahtlosen zellularen Kommunikationsnetzes (400) durchgeführt wird, wobei das Verfahren umfasst:

Empfangen, von einem Benutzergerät, UE, von Messberichten der ersten Signalstärkedaten für einen drahtlosen Rücktransport ("Backhaul") zwischen einem Mobilrelais (402) und einer Basisstation (410); Empfangen, von dem UE, von Messberichten der zweiten Signalstärkedaten für ein Signal zwischen dem Benutzergerät (406) und dem Mobilrelais; Empfangen, von dem UE, von Messberichten der dritten Signalstärkedaten für ein Signal zwischen dem UE und der Basisstation; Bestimmen eines Zellenparameters für ein Benutzergerät, das mit dem Mobilrelais und der Basisstation kommuniziert, unter Verwendung der ersten, zweiten und dritten Signalstärkedaten; Auswerten des Zellenparameters, um den Zellenwiederauswahl- oder -übergabedienst für das UE auszulegen; Anpassen des Zellenparameters, um das UE vom Mobilrelais zur Basisstation zu lenken, wenn ein Signal zwischen dem UE und dem Mobilrelais stärker ist als ein Signal zwischen dem UE und der Basisstation ist, und ein Rücktransportsignal zwischen dem Mobilrelais und der Basisstation kleiner als das Signal zwischen dem UE und der Basisstation ist; wobei der Zellenparameter ein Zellenauswahlparameter und/oder ein Übergabeparameter ist; und Übertragen des Dienstes für das UE vom Mobilrelais zur Basisstation basierend auf dem angepassten Zellenparameter.

2. Verfahren nach Anspruch 1, wobei der Zellenparameter ein CIO-Parameter (CIO = "Cell Individual Offset") ist.

3. Verfahren nach Anspruch 1, ferner umfassend:
Anpassen der Wiederauswahlparameter und Übergabeparameter basierend auf den ersten Signalstärkedaten, so dass ein Versorgungsbereich des Mobilrelais (402) für UEs (406) im verbundenen Modus derselbe ist wie ein Versorgungsbereich des Mobilrelais für UEs im Ruhezustand.

4. Verfahren nach Anspruch 1, wobei das Anpassen des Zellenparameters zur Übertragung des UE vom Mobilrelais zur Basisstation erfolgt, wenn ein Rücktransportsignal zwischen dem Mobilrelais (402) und der Basisstation (410) kleiner ist als das Signal zwischen dem UE (406) und der Basisstation.

5. Verfahren nach Anspruch 1, wobei die zweiten Signalstärkedaten und die dritten Signalstärkedaten in Verbindung mit einem A3-Ereignis empfangen werden.

6. Verfahren nach Anspruch 1, wobei die ersten, zweiten und dritten Signalstärkedaten von der Kleinzellensteuerung (420) empfangen werden, die über einen drahtgebundenen Rücktransport mit der Basisstation (410) gekoppelt ist, und die Kleinzellensteuerung den Parameter bestimmt und die Netzausrüstung das Mobilrelais (402) und die Basisstation (410) enthält.

7. Verfahren nach Anspruch 1, wobei die ersten, zweiten und dritten Signalstärkedaten von dem Mobilrelais (402) empfangen werden, das Mobilrelais den Parameter bestimmt und die Netzausrüstung das Mobilrelais und die Basisstation (410) enthält.

8. Verfahren nach Anspruch 1, wobei dritte Signaldaten von mehreren UEs (406) empfangen werden, die einen Dienst von dem Mobilrelais (402) empfangen, wobei das Verfahren ferner umfasst:

Bestimmen der CIO-Parameter (CIO = "Cell Individual Offset") für jedes der mehreren UEs; und
Anwenden eines höchsten CIO-Parameters der CIO-Parameter für jedes der mehreren UEs auf Übergabe- und Wiederauswahlverfahren für die mehreren UEs.

9. Verfahren nach Anspruch 1, wobei dritte Signaldaten von mehreren UEs (406) empfangen werden, die einen Dienst von dem Mobilrelais (402) empfangen, wobei das Verfahren ferner umfasst:

Bestimmen der CIO-Parameter (CIO = "Cell Individual Offset") für jedes der mehreren UEs; und
Anwenden eines niedrigsten CIO-Parameters der CIO-Parameter für jedes der mehreren UEs auf Übergabe- und Wiederauswahlverfahren für die mehreren UEs.

10. Kleinzellensteuerung (200), die mit einem Rücktransport (116) eines zellularen Telekommunikationsnetzes (100) gekoppelt ist, wobei die Kleinzellensteuerung enthält:

einen Speicher (202);
eine Netzwerkschnittstelle (208);
Einen Prozessor (204); und
ein nicht flüchtiges, computerlesbares Medium mit darauf gespeicherten computerausführbaren Anweisungen, die, wenn sie von einem Prozessor ausgeführt werden, die folgenden Operationen durchführen:

Empfangen, von einem Benutzergerät, UE, von Messberichten der ersten Signalstärkedaten für einen drahtlosen Rücktransport zwischen einem Mobilrelais (300, 402) und einer Basisstation (316, 410);
Empfangen, von dem UE, von Messberichten der zweiten Signalstärkedaten für ein Signal zwischen dem Benutzergerät (406) und dem Mobilrelais;
Empfangen, von dem UE, von Messberichten der dritten Signalstärkedaten für ein Signal zwischen dem UE und der Basisstation;
Bestimmen eines Zellenparameters für ein Benutzergerät, das mit dem Mobilrelais und der Basisstation kommuniziert, unter Verwendung der ersten, zweiten und dritten Signalstärkedaten;
Auswerten des Zellenparameters, um den Zellenwiederauswahl- oder -übergabedienst für das UE auszulegen; und
Anpassen des Zellenparameters, um das UE vom Mobilrelais zur Basisstation zu lenken, wenn ein Signal zwischen dem UE und dem Mobilrelais stärker ist als ein Signal zwischen dem UE und der Basisstation ist, und ein Rücktransportsignal zwischen dem Mobilrelais und der Basisstation kleiner als das Signal zwischen dem UE und der Basisstation ist; und
Übertragen eines Dienstes für das UE vom Mobilrelais zur Basisstation basierend auf dem angepassten Zellenparameter;
wobei der Zellenparameter ein Zellenauswahlparameter und/oder ein Übergabeparameter ist.

11. Kleinzellensteuerung (200) nach Anspruch 10, wobei der Zellenparameter ein CIO-Parameter (CIO = "Cell Individual Offset") oder ein $Q_{offset}$-Parameter ist.

12. Kleinzellensteuerung (200) nach Anspruch 11, wobei die Operationen ferner umfassen:
Anpassen der Wiederwahlparameter und Übergabeparameter basierend auf den ersten Signalstärkedaten, so dass ein Versorgungsbereich des Mobilrelais für UEs im verbundenen Modus derselbe ist wie ein Versorgungsbereich des Mobilrelais für UEs im Ruhezustand.

13. Mobilrelaisvorrichtung (300), die über einen drahtlosen Rücktransport in einem zellularen Telekommunikationsnetz (100, 400) mit einer Basisstation (316) gekoppelt ist, wobei die Mobilrelaisvorrichtung enthält:

einen Speicher (302);
eine Netzwerkschnittstelle;
einen Prozessor (304); und
ein nicht flüchtiges, computerlesbares Medium mit darauf gespeicherten computerausführbaren Anweisungen, die, wenn sie von einem Prozessor ausgeführt werden, die folgenden Operationen durchführen:

> Empfangen, von einem Benutzergerät, UE, von Messberichten der ersten Signalstärkedaten für einen drahtlosen Rücktransport zwischen dem Mobilrelais (300) und einer Basisstation (316);
> Empfangen, von dem UE, von Messberichten der zweiten Signalstärkedaten für ein Signal zwischen dem Benutzergerät (326) und dem Mobilrelais;
> Empfangen, von dem UE, von Messberichten der dritten Signalstärkedaten für ein Signal zwischen dem UE und der Basisstation;
> Bestimmen eines Zellenparameters für ein Benutzergerät, das mit dem Mobilrelais und der Basisstation kommuniziert, unter Verwendung der ersten, zweiten und dritten Signalstärkedaten;
> Auswerten des Zellenparameters, um den Zellenwiederauswahl- oder -übergabedienst für das UE auszulegen;
> Anpassen des Zellenparameters, um die UE vom Mobilrelais zur Basisstation zu lenken; und
> Übertragen eines Dienstes für das UE vom Mobilrelais zur Basisstation basierend auf dem angepassten Zellenparameter;
> wobei der Zellenparameter ein Zellenauswahlparameter und/oder ein Übergabeparameter ist;
> wobei, wenn ein Signal zwischen dem UE und dem Mobilrelais stärker ist als ein Signal zwischen dem UE und der Basisstation und ein Rücktransportsignal zwischen dem Mobilrelais und der Basisstation kleiner ist als das Signal zwischen dem UE und der Basisstation, der Dienst für das UE vom Mobilrelais zur Basisstation übertragen wird.

14. Mobilrelaisvorrichtung (300) nach Anspruch 13, wobei der Zellenparameter ein CIO-Parameter (CIO = "Cell Individual Offset") ist.

15. Mobilrelaisvorrichtung (300) nach Anspruch 13, wobei die Operationen ferner umfassen:
Anpassen der Wiederauswahlparameter und Übergabeparameter basierend auf den ersten Signalstärkedaten, so dass ein Versorgungsbereich des Mobilrelais für UEs (326) im verbundenen Modus derselbe ist wie ein Versorgungsbereich des Mobilrelais für UEs im Ruhezustand.

## Revendications

1. Procédé exécuté au niveau d'un organe de commande de petites cellules d'un réseau de communication cellulaire sans fil (400), le procédé comprenant :

> la réception, en provenance d'un équipement utilisateur, UE, de rapports de mesure de premières données d'intensité de signal pour une liaison de raccordement sans fil entre un relais mobile (402) et une station de base (410) ;
> la réception, en provenance de l'UE, de rapports de mesure de deuxièmes données d'intensité de signal pour un signal entre l'équipement utilisateur (406) et le relais mobile ;
> la réception, en provenance de l'UE, de rapports de mesure de troisièmes données d'intensité de signal pour un signal entre l'UE et la station de base ;
> la détermination d'un paramètre de cellule pour un équipement utilisateur en communication avec le relais mobile et la station de base à l'aide des premières, deuxièmes et troisièmes données d'intensité de signal ;
> l'évaluation du paramètre de cellule dans le but de configurer un service de resélection ou de transfert de cellule pour l'UE ;
> l'ajustement du paramètre de cellule pour orienter l'UE du relais mobile à la station de base lorsqu'un signal entre l'UE et le relais mobile est plus fort qu'un signal entre l'UE et la station de base et qu'un signal de liaison de raccordement entre le relais mobile et la station de base est inférieur au signal entre l'UE et la station de base ;
> dans lequel le paramètre de cellule est un paramètre de sélection de cellule et/ou un paramètre de transfert ; et
> le transfert du servie pour l'UE du relais mobile à la station de base sur la base du paramètre de cellule ajusté.

2. Procédé selon la revendication 1, dans lequel le paramètre de cellule est un paramètre de décalage individuel cellulaire, CIO.

3. Procédé selon la revendication 1, comprenant en outre :
l'ajustement de paramètres de resélection et de paramètres de transfert sur la base des premières données d'intensité de signal de sorte qu'une zone de couverture du relais mobile (402) pour des UE (406) en mode connecté soit la même qu'une zone de couverture du relais mobile pour des UE en mode inactif.

4. Procédé selon la revendication 1, dans lequel l'ajustement du paramètre de cellule pour transférer l'UE du relais mobile à la station de base a lieu lorsqu'un signal de liaison de raccordement entre le relais mobile (402) et la station de base (410) est inférieur au signal entre l'UE (406) et la station de base.

5. Procédé selon la revendication 1, dans lequel les deuxièmes données d'intensité de signal et les troisièmes données d'intensité de signal sont reçues conjointement avec un événement A3.

6. Procédé selon la revendication 1, dans lequel les premières, deuxièmes et troisièmes données d'intensité de signal sont reçues par l'organe de commande (420) de petites cellules couplé à la station de base (410) par l'intermédiaire d'une liaison de raccordement filaire, et l'organe de commande de petites cellules détermine le paramètre et l'équipement réseau comprend le relais mobile (402) et la station de base (410).

7. Procédé selon la revendication 1, dans lequel les premières, deuxièmes et troisièmes données d'intensité de signal sont reçues par le relais mobile (402), le relais mobile détermine le paramètre, et l'équipement réseau comprend le relais mobile et la station de base (410).

8. Procédé selon la revendication 1, dans lequel des troisièmes données de signal sont reçues en provenance d'une pluralité d'UE (406) recevant un service du relais mobile (402), le procédé comprenant en outre :

   la détermination de paramètres de décalage individuel cellulaire, CIO, pour chaque UE de la pluralité d'UE ; et l'application d'un paramètre CIO le plus élevé parmi les paramètres CIO pour chaque UE de la pluralité d'UE aux processus de transfert et de resélection pour la pluralité d'UE.

9. Procédé selon la revendication 1, dans lequel des troisièmes données de signal sont reçues en provenance d'une pluralité d'UE (406) recevant un service du relais mobile (402), le procédé comprenant en outre :

   la détermination de paramètres de décalage individuel cellulaire, CIO, pour chaque UE de la pluralité d'UE ; et l'application d'un paramètre CIO le plus bas parmi les paramètres CIO pour chaque UE de la pluralité d'UE aux processus de transfert et de resélection pour la pluralité d'UE.

10. Organe de commande de petites cellules (200) couplé à une liaison de raccordement (116) d'un réseau de télécommunications cellulaire (100), l'organe de commande de petites cellules comprenant :

   une mémoire (202) ;
   une interface réseau (208) ;
   un processeur (204) ; et
   un support non transitoire lisible par ordinateur sur lequel sont mémorisées des instructions exécutables par ordinateur qui, lorsqu'elles sont exécutées par le processeur, effectuent les opérations suivantes :

      la réception, en provenance d'un équipement utilisateur, UE, de rapports de mesure de premières données d'intensité de signal pour une liaison de raccordement sans fil entre un relais mobile (300, 402) et une station de base (316, 410) ;
      la réception, en provenance de l'UE, de rapports de mesure de deuxièmes données d'intensité de signal pour un signal entre l'équipement utilisateur (406) et le relais mobile ;
      la réception, en provenance de l'UE, de rapports de mesure de troisièmes données d'intensité de signal pour un signal entre l'UE et la station de base ;
      la détermination d'un paramètre de cellule pour un équipement utilisateur en communication avec le relais mobile et la station de base à l'aide des premières, deuxièmes et troisièmes données d'intensité de signal ;
      l'évaluation du paramètre de cellule dans le but de configurer un service de resélection ou de transfert de cellule pour l'UE ; et
      l'ajustement du paramètre de cellule pour orienter l'UE du relais mobile à la station de base lorsqu'un signal entre l'UE et le relais mobile est plus fort qu'un signal entre l'UE et la station de base et qu'un signal de liaison de raccordement entre le relais mobile et la station de base est inférieur au signal entre l'UE et la station de base ; et
      le transfert du service pour l'UE du relais mobile à la station de base sur la base du paramètre de cellule ajusté ;

dans lequel le paramètre de cellule est un paramètre de sélection de cellule et/ou un paramètre de transfert.

11. Organe de commande de petites cellules (200) selon la revendication 10, dans lequel le paramètre de cellule est un paramètre de décalage individuel cellulaire, CIO, ou un paramètre $Q_{offset}$.

12. Organe de commande (200) de petites cellules selon la revendication 11, dans lequel les opérations comprennent en outre :
l'ajustement de paramètres de resélection et de paramètres de transfert sur la base des premières données d'intensité de signal de sorte qu'une zone de couverture du relais mobile pour des UE en mode connecté soit la même qu'une zone de couverture du relais mobile pour des UE en mode inactif.

13. Dispositif de relais mobile (300) couplé à une station de base (316) par l'intermédiaire d'une liaison de raccordement sans fil dans un réseau de télécommunications cellulaire (100, 400), le dispositif de relais mobile comprenant :

   une mémoire (302) ;
   une interface réseau ;
   un processeur (304) ; et
   un support non transitoire lisible par ordinateur sur lequel sont mémorisées des instructions exécutables par ordinateur qui, lorsqu'elles sont exécutées par le processeur, effectuent les opérations suivantes :

      la réception, en provenance d'un équipement utilisateur, UE, de rapports de mesure de premières données d'intensité de signal pour une liaison de raccordement sans fil entre le relais mobile (300) et une station de base (316) ;
      la réception, en provenance de l'UE, de rapports de mesure de deuxièmes données d'intensité de signal pour un signal entre l'équipement utilisateur (326) et le relais mobile ;
      la réception, en provenance de l'UE, de rapports de mesure de troisièmes données d'intensité de signal pour un signal entre l'UE et la station de base ;
      la détermination d'un paramètre de cellule pour un équipement utilisateur en communication avec le relais mobile et la station de base à l'aide des premières, deuxièmes et troisièmes données d'intensité de signal ;
      l'évaluation du paramètre de cellule dans le but de configurer un service de resélection ou de transfert de cellule pour l'UE ;
      l'ajustement du paramètre de cellule pour orienter l'UE du relais mobile à la station de base ; et
      le transfert du service pour l'UE du relais mobile à la station de base sur la base du paramètre de cellule ajusté ;
      dans lequel le paramètre de cellule est un paramètre de sélection de cellule et/ou un paramètre de transfert ;
      dans lequel, lorsqu'un signal entre l'UE et le relais mobile est plus fort qu'un signal entre l'UE et la station de base et qu'un signal de liaison de raccordement entre le relais mobile et la station de base est inférieur au signal entre l'UE et la station de base, un service pour l'UE est transféré du relais mobile à la station de base.

14. Dispositif relais mobile (300) selon la revendication 13, dans lequel le paramètre de cellule est un paramètre de décalage individuel cellulaire, CIO.

15. Dispositif relais mobile (300) selon la revendication 13, dans lequel les opérations comprennent en outre :
l'ajustement de paramètres de resélection et de paramètres de transfert est basé sur les premières données d'intensité de signal de sorte qu'une zone de couverture du relais mobile pour des UE (326) en mode connecté soit la même qu'une zone de couverture du relais mobile pour des UE en mode inactif.

FIG. 1

200

## Network Resource Controller

Memory

202 — ROM | RAM

204 — CPU

206 — User Interface

208 — Network Interface

System Bus

210

212

HO Parameters — 214

Selection Parameters — 216

Signal Strength Data — 218

## FIG. 2

310  300  320

System Bus

Tx — 312

Memory — 302

CPU — 304

DB — 306

Tx — 322

Rx — 314

Rx — 324

308

316

326
326
326

## FIG. 3

FIG. 4

FIG. 5

FIG. 6

FIG. 7

FIG. 8

FIG. 9A

FIG. 9B

FIG. 9C

FIG. 10A

FIG. 10B

1100

S1102 — Initiate mobile relay

S1104 — Set Tx power

S1106 — Receive measurement report

S1108 — Periodic report or A3 report?

S1110 — Determine $Q_{A3}$ from $Q_{meas,s}$ and $Q_{meas,n}$

A3

Periodic

S1112 — Determine $Q_{Edge}$ from $Q_{meas,s}$ and $Q_{meas,n}$

S1114 — Determine selection or HO parameters based on $Q_{meas,B}$

S1116 — Handover or reselect cell

FIG. 11

FIG. 12

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014064158 A